# EUROPEAN PATENT SPECIFICATION

(11) **EP 3 237 506 B1**
(45) Date of publication and mention of the grant of the patent: **23.05.2018**
(21) Application number: 15804400.8
(22) Date of filing: 01.12.2015
(51) Int. Cl.: C08J 7/04, B65D 23/02, B65D 25/14

(54) **CONTAINER FOR VISCOUS LIQUIDS INTERNALLY COATED WITH OIL WITH EMULSIFIER**
BEHÄLTER FÜR VISKOSE FLÜSSIGKEITEN, INNEN MIT ÖL UND EINEM EMULGATOR BESCHICHTET
RÉCIPIENT POUR DES LIQUIDES VISQUEUX REVÊTU INTÉRIEUREMENT D'HUILE AVEC UN ÉMULSIFIANT

(30) Priority: 22.12.2014 EP 14199777
(43) Date of publication of application: 01.11.2017
(73) Proprietor: Unilever NV, 3013 AL Rotterdam (NL); Unilever PLC, London, Greater London EC4Y 0DY (GB)
(72) Inventor: BELTMAN, Robert, 3133 AT Vlaardingen (NL); NEDIYEDATH, Suresh, Kumar, 3133 AT Vlaardingen (NL); RESZKA, Aleksander, Arie, 3133 AT Vlaardingen (NL); ZWART, Pieter, 3133 AT Vlaardingen (NL)
(74) Representative: Fijnvandraat, Arnoldus
(86) International application number: PCT/EP2015/078211
(87) International publication number: WO 2016/102158

(56) References cited:
- GB-A- 2 337 528
- US-A- 5 662 956
- US-A1- 2007 179 230
- US-A1- 2008 283 483
- US-A1- 2008 286 480
- Riken Vitamin: "Kind of Food Emulsifiers", , 5 November 2013 (2013-11-05), pages 1-4, XP055251803, Retrieved from the Internet: URL:https://web.archive.org/web/2013110503 2257/http://www.rikenvitamin.com/foodingre dients/emulsifier/kind.html [retrieved on 2016-02-19]

## Description

### FIELD OF THE INVENTION

The present invention relates to a container which internally has been coated with an oil containing an emulsifier. The invention also relates to the internally coated container containing a viscous liquid. The invention also relates to a method for preparing the container, as well as a method for preparing the container containing a viscous liquid.

### BACKGROUND TO THE INVENTION

Nowadays many condiments like mayonnaise, light mayonnaise, ketchup and salad dressings are packed in plastic squeeze bottles. These are often put upside down, such that the bottle's opening and lid are at the bottom and serve as stand for the bottle. The contents of the bottle can be released relatively easily, as the consumer only has to open the lid and squeeze the bottle to release its content. A disadvantage of these bottles is that the bottles often are not emptied entirely, as part of the condiment may stick to the internal wall of the bottle. Several solutions have been proposed to improve release of the condiment from the bottle.

US 2008/0283483 A2 and US 2008/0286480 A1 both relate to containers which facilitate improved product release and stability. Containers are coated with a vegetable liquid oil, which may contain lecithin at a concentration of maximally 20%.
US 6,247,603 relates to the dispensing performance of containers, and teaches to coat a container with vegetable liquid oil.
GB 503,421 relates to a method for dispensing frozen food-stuff from a container, and teaches to coat a container with vegetable liquid oil..
US 5,296,021 relates to an emulsion containing lecithin, an edible oil, an emulsifying agent, which can be dispensed as an aerosol, to coat cooking utensils, such as baking and frying pans, to prevent food from sticking to the utensil during cooking.
GB 2 337 528 B relates to vegetable oil products for use in cooking which are adapted to be dispensed by spraying. The oil may contain lecithin.
US 5,662,956 relates to an emulsion containing hydrophilic lecithin, for depanning baked goods.

### SUMMARY OF THE INVENTION

In spite of previous developments, in particular the evacuation of food emulsions from containers still can be improved. In particular when the food emulsion is an oil-in-water emulsion, and contains enzyme modified egg yolk, then the emulsion is difficult to release from the container. Hence the present invention has the objective to improve the evacuation of condiments from containers, in particular when the condiments is a food emulsion, more in particular an oil-in-water emulsion, and in particular when the emulsion contains enzyme modified egg yolk.

We have now found that viscous liquids, and in particular condiments, can be effectively evacuated from a container, when the container has been internally coated with a vegetable oil containing an emulsifier having a HLB-value ranging from 1 to 12, prior to filling the coated container with the condiment. The emulsifier comprises one or more compounds selected from monoglycerides of a fatty acid, sucrose fatty acid esters, and sorbitan fatty acid esters. In particular when the condiment is an oil-in-water emulsion and contains enzyme modified egg yolk, the coating with oil with the emulsifier is very effective in evacuating the viscous liquid from the container.

Accordingly in a first aspect the invention provides a container comprising an outlet and walls having an inner surface defining a chamber, wherein at least part of the inner surface of the container is coated with oil containing an emulsifier having a HLB-value ranging from 1 to 12 at a concentration ranging from 0.1% to 5% by weight, and wherein the emulsifier comprises one or more compounds selected from monoglycerides of a fatty acid, sucrose fatty acid esters, and sorbitan fatty acid esters.

The second aspect of the invention provides a method for preparation of a coated container according to the first aspect of the invention, comprising the steps:
a) providing a container comprising an outlet and walls having an inner surface defining a chamber; and
b) coating the inner surface of the container with an oil containing an emulsifier having a HLB-value ranging from 1 to 12 at a concentration ranging from 0.1% to 5% by weight, and wherein the emulsifier comprises one or more compounds selected from monoglycerides of a fatty acid, sucrose fatty acid esters, and sorbitan fatty acid esters.

In a third aspect, the present invention provides a method for improving the evacuation of a viscous liquid from a container, by using an oil containing an emulsifier having a HLB-value ranging from 1 to 12 at a concentration ranging from 0.1% to 5% by weight, and wherein the emulsifier comprises one or more compounds selected from monoglycerides of a fatty acid, sucrose fatty acid esters, and sorbitan fatty acid esters, to coat at least part of the inner surface of the container, prior to filling the container with the viscous liquid.

### DETAILED DESCRIPTION OF THE INVENTION

All percentages, unless otherwise stated, refer to the percentage by weight (wt%). "Spoonable" means that a composition is semi-solid but not free-flowing on a time scale typical for eating a meal, meaning not free-flowing within a time period of an hour. A sample of such substance is able to be dipped with a spoon from a container containing the composition.

"Pourable" is understood to mean that a composition is free-flowing; generally a spoon is not required to take a sample from a container containing a pourable composition.

"Polymeric or oligomeric water structurant" is understood to mean that this is a compound or a mixture of compounds which is an oligomer (meaning a branched or unbranched molecule containing a maximum of 20 monomer units) or a polymer (meaning a branched or unbranched molecule containing more than 20 monomer units) which is dispersible in water or dissolves in water to thicken or bind the water and increase the viscosity of the mixture as compared to pure water. In here a "polymeric or oligomeric water structurant" does not originate from egg yolk, whole egg, enzyme modified egg yolk, egg yolk modified with phospholipase, egg yolk modified with phospholipase A2, white or yellow mustard seed, and ground white or yellow mustard seed,

Except in the operating and comparative examples, or where otherwise explicitly indicated, all numbers in this description indicating amounts or ratios of material or conditions of reaction, physical properties of materials and/or use are to be understood as modified by the word "about".

### HLB value

HLB values are a well-known classification of surfactants or mixtures of surfactants, based on the ratio of the hydrophilic and hydrophobic portions of the surfactant molecules.

The HLB value is given by the equation HLB = 20*Mₕ/M, where Mₕ is the molecular mass of the hydrophilic part of the molecule and M is the molecular mass of the whole molecule, thus giving a value on an arbitrary scale of 0 to 20. For fatty acid esters, HLB = 20 (1-S/A) where
S = Saponification value
A = Acid number of the fatty acid

Therefore an HLB value of 0 corresponds to a completely hydrophobic molecule and an HLB value of 20 corresponds to a completely hydrophilic molecule. Typical HLB values are:

| | |
|---|---|
| 0 to 3 | an anti-foaming agent |
| 4 to 6 | a water-in-oil emulsifier |
| 7 to 9 | a wetting agent |
| 8 to 18 | an oil-in-water emulsifier |
| 13 to 15 | a detergent |
| 10 to 18 | a solubiliser or a hydrotrope |

### Container with at least partly coated internal surface

In a first aspect the invention provides a container comprising an outlet and walls having an inner surface defining a chamber, wherein at least part of the inner surface of the container is coated with oil containing an emulsifier having a HLB-value ranging from 1 to 12 at a concentration ranging from 0.1 % to 5% by weight, and wherein the emulsifier comprises one or more compounds selected from monoglycerides of a fatty acid, sucrose fatty acid esters, and sorbitan fatty acid esters.

The term 'oil' as used herein refers to lipids selected from triglycerides, diglycerides, monoglycerides and combinations thereof. Preferably the oil in the context of this invention comprises at least 90 wt% of triglycerides, more preferably at least 95 wt%. Preferably the oil is liquid at room temperature. Preferably the oil contains less than 20 wt% of solid oil at 5°C, preferably less than 10 wt% solid oil. More preferred the oil is free from solid oil at 5°C. Most preferred the oil is liquid at 5°C. Preferred oils for use in the context of this invention are vegetable oils which are liquid at 5°C. Preferably the oil comprises sunflower oil, rapeseed oil, olive oil, soybean oil, and combinations of these oils.

The emulsifiers in the oil have been added to the oil in isolated form. Natural oils may contain emulsifiers, dependent on the type of oil, and the level of purification. The concentration of emulsifiers as used in the oil in the invention refers to the amount of emulsifiers which have been added to the oil. This means that emulsifier is added to the oil, before the oil containing the emulsifier is applied to the inner surface of the container of the invention.

Preferably at least 80% of the inner surface of the container is coated with oil containing an emulsifier. More preferred at least 90% of the inner surface of the container is coated with oil containing an emulsifier, more preferred at least 95%. More preferred the inner surface of the container is nearly completely coated with the oil with an emulsifier, more preferred the inner surface is completely coated.

Preferably the amount of oil containing emulsifier on the inner surface ranges from 0.001 to 0.005 gram per square centimetre. Preferably the amount of oil containing emulsifier ranges from 0.0015 to 0.004 gram per square centimetre.

Preferably the emulsifier has a HLB-value ranging from 3 to 11. More preferably the emulsifier has a HLB-value ranging from 4 to 10. In that case the emulsifier has the greatest effect on the evacuation of an oil-in-water emulsion from the container of the invention. Emulsifiers with a relatively high HLB value are more difficult to dissolve in oil than emulsifiers with a higher HLB value.

Preferably the concentration of the emulsifier ranges from 0.2% to 4% by weight of the oil. More preferred, the concentration of the emulsifier ranges from 0.25% to 4%, more preferred from 0.3% to 3% by weight, more preferred from 0.5% to 2.5% by weight of the oil.

At the lower end of the HLB-values (from 1 to 4), the concentration of the emulsifier preferably ranges from 0.5% to 5%, more preferred from 1% to 4% by weight of the oil. Preferably at higher HLB-values (from 3 to 12, preferably from 4 to 11, more preferred from 4 to 10), the emulsifier concentration ranges from 0.1% to 5%, more preferred from 0.2% to 4% by weight of the oil, more preferred from 0.25% to 4%, more preferred from 0.3% to 3% by weight, more preferred from 0.5% to 2.5% by weight of the oil.

Preferred emulsifiers include the sucrose fatty acid esters. These are compounds which are esters of sucrose and one or more fatty acids. Sucrose esters of fatty acids can be obtained by esterifying one or more of the hydroxyl group of a sucrose molecule with fatty acids. The fatty acids react with one or more hydroxyl groups to form mono, di, tri or multi-fatty acid ester, or mixtures thereof. As sucrose has 8 hydroxyl groups, the maximum number of fatty acids that is esterified to one sucrose molecule is eight, to form sucrose octa fatty acid ester. Preferably the sucrose fatty acid ester comprises a mixed ester or homo-ester. Suitable fatty acids may vary both in alkyl chain length and in degree of unsaturation. The fatty acid is preferably selected from the group consisting of lauric acid, myristic acid, palmitic acid, stearic acid and mixtures thereof.

Sucrose fatty acid esters can also be mixtures of different compounds, meaning having a different degree of substitution or a mixture of different types of fatty acids, or both. Sucrose esters are available with a wide range of HLB values which are controlled by the degree of esterification and the type of fatty acid used. Suitable suppliers are Mitsubishi-Kagaku Foods Corporation (Tokyo, Japan) and Sisterna BV (Roosendaal, The Netherlands). Sucrose fatty acid esters are also known in Europe as E473.

Another type of preferred emulsifier is the sorbitan fatty acid esters. These are esters of sorbitan and one or more fatty acids, with a variation in type of fatty acids and number of fatty acid residues per sorbitan moiety, leading to a variety of HLB values. These emulsifiers are available under the tradename Span, from Croda Europe Ltd. (Gouda, Netherlands).

Preferably the emulsifier comprises a monoglyceride of a fatty acid. A monoglyceride of a fatty acid is a common emulsifier, which is prepared by reacting glycerol with a vegetable oil or with fatty acids. The type of vegetable oil, the degree of saturation of the fatty acids, and the type of fatty acids influence their properties. Preferably, in case the emulsifier comprises a monoglyceride of a fatty acid, the HLB value ranges from 2 to 11, more preferred from 3 to 11, more preferred from 4 to 11, and more preferred from 4 to 8. Preferably the monoglyceride of a fatty acid comprises monoglycerides which have been prepared from palm oil. Such emulsifier is available from DuPont Danisco as Dimodan P.

Preferably the emulsifier additionally comprises lecithin. Lecithin is a general term for a substance from animal or plant origin, containing phospholipids. The most abundant phospholipids are phosphatidylcholine (PC), phosphatidylethanolamine (PE), phosphatidylinositol (PI), phosphatidic acid (PA). Generally the amount of phospholipids in lecithin ranges from about 40% to about 50%. Other compounds in lecithin are generally triglycerides, glycolipids, and complexed sugars. In the context of the present invention, when referring to the concentration of emulsifier in the oil, the entire mixture of lecithin is meant, not only the phospholipids. The most abundant sources of lecithin used in foods are oil crops and oil seeds, and chicken eggs. The lecithin preferably originates from soyabean, sunflower seed, rapeseed, or egg, or from any combination of these. Preferably, in case the emulsifier comprises a lecithin, the HLB value ranges from 2 to 11, more preferred from 4 to 11, more preferred from 4 to 10.

The lecithin may be combined with one or more compounds selected from monoglycerides of a fatty acid, sucrose fatty acid esters, and sorbitan fatty acid esters.

Preferably at least 25% of the phospholipids in the lecithin has been hydrolysed in a process using phospholipase A2. The hydrolysis preferably is done by reacting the lecithin in the presence of water and phospholipase A2, and this results into split of a part of the fatty acids from a phospholipid molecule. Preferably the lecithin may be partly fractionated such that one or more of the phospholipids are enriched as compared to the native lecithin. Preferably the lecithin comprises lecithin enriched in phosphatidylcholine.

In case the emulsifier in the oil comprises lecithin, then preferably the concentration of lecithin ranges from 0.2% to 4% by weight. Preferably the concentration of lecithin ranges from 0.25% to 3% by weight, more preferred 0.4% to 2.5% by weight, more preferred from 0.5% to 2.3% by weight, more preferred from 0.8% to 2 % by weight. Preferably the concentration of phospholipid in the oil ranges from 0.1 % to 2% by weight. More preferred the concentration of phospholipids ranges from 0.2% to 1.8% by weight, more preferred from 0.2% to 1.5% by weight of the oil. Suitable lecithins are available from suppliers like Sime Darby Unimills BV (Zwijndrecht, Netherlands), and Cargill (Minneapolis, MN, USA).

When lecithin is dispersed in oil, the resulting mix may become slightly turbid, indicating that not all components of the lecithin are oil soluble. These insoluble components might be deposited in a spraying machine for the oil during long production runs and might cause fouling of the spraying machine, leading to inadequate performance of the machine. Such spraying machine may be used to coat the bottles. To prevent fouling, frequent cleaning of the spraying machine might be needed or alternatively a filter system in the machine might be applied to prevent excessive fouling. Another problem might be that the oil insoluble particles will accumulate in the spraying system and eventually block the spraying nozzle for applying the coating layer on the container. To prevent potential blocking, the spraying machine contains filters, typically having a mesh size of 40 micrometer. When pumping the lecithin mix through these filters, insoluble lecithin components may block the filter, leading to reduced performance.

The oil containing lecithin may be filtered or centrifuged prior to spraying, to remove potentially insoluble components. Nevertheless such centrifuged solution still may become turbid within a week when stored at about 20°C. The turbidity does not negatively influence the effect on the evacuation of a viscous liquid from the container. When the oil comprises a monoglyceride of a fatty acid in addition to the lecithin, then the oil containing these compounds remains clear during storage for several weeks, which leads to better efficiency in the coating of the container, when performed on an industrial scale. Therefore preferably the oil used in the invention comprises a monoglyceride of a fatty acid and lecithin. More preferred in this case the monoglyceride of a fatty acid comprises an unsaturated monoglyceride. More preferred the monoglyceride is based on sunflower oil or rapeseed oil, more preferred sunflower oil. The concentration of lecithin in this case preferably ranges from 0.2% to 3% by weight, more preferred from 0.25% to 2.5% by weight of the oil. Preferably the concentration of the monoglycerides ranges from 0.5% to 3% by weight, more preferred from 1% to 2% by weight of the oil. Preferably, after lecithin and the monoglyceride have been dissolved in the oil, the oil mixture is centrifuged before being applied to the container. A suitable monoglyceride for this purpose is Dimodan U/J ex DuPont Danisco (Copenhagen, Denmark).

The wall of the container can be any material which is commonly used for storage and distribution of food products, e.g. glass and synthetic polymers like polyethylene, polypropylene, and polyethylene terephthalate. Preferably the wall of the container comprises polyethylene terephthalate. In particular when the walls of the container comprise this polymer, oil-in-water emulsions containing enzyme-modified egg yolk may be difficult to release from the container.

Preferably the container is in the form of a bottle. Preferably the container is made from a material which is at least partly flexible and elastic. In such case the container can be used as a squeeze bottle, and upon squeezing such bottle containing a condiment, the condiment is evacuated from the bottle by the overpressure created by the squeezing. Generally such container contains a small opening, in order to create the overpressure upon squeezing. Such bottles are well known and widely used for condiments. After squeezing such packaging tends to return to its original shape. In the context of the present invention that means that the container returns to its original shape when it is squeezed to evacuate a viscous liquid from the container and subsequently released.

Preferably the container according to the invention contains a viscous liquid in the chamber. The viscous liquid may be any viscous preparation which is normally sold in plastic bottle, like condiments (e.g. ketchup, sauce, mayonnaise), or personal care products like gels, shampoos, hair conditioners, creams, and the like. With viscous liquid is meant a thickened liquid which may be free-flowing or spoonable. When present in the container, the container generally needs to be squeezed to release such viscous liquid from the container and through a small opening. A membrane with a slit may be present in such small opening, to prevent leakage of the viscous liquid from the container due to gravity. Preferably the viscous liquid is a condiment, and preferably such a condiment is spoonable or free-flowing. In particular when the condiment is spoonable, the condiment may be difficult to release from a container.

Preferably the condiment is an oil-in-water emulsion. Examples of oil-in-water emulsions encompassed by the present invention include mayonnaise, salad dressings and sauces. Preferably, the oil-in-water emulsion is a mayonnaise or a sauce, most preferably a mayonnaise. Generally such a mayonnaise is spoonable.

Mayonnaise is generally known as a thick, creamy sauce that can be used as a condiment with other foods. Mayonnaise is a stable water-continuous emulsion of vegetable oil, egg yolk and either vinegar or lemon juice. In many countries the term mayonnaise may only be used in case the emulsion conforms to the 'standard of identity', which defines the composition of a mayonnaise. For example, the standard of identity may define a minimum oil level, and a minimum egg yolk amount. Also mayonnaise-like products having oil levels lower than defined in a standard of identity can be considered to be mayonnaises. These kind of products often contain thickeners like starch to stabilise the aqueous phase. Mayonnaise may vary in colour, and is generally white, cream-coloured, or pale yellow. The texture may range from of light creamy to thick, and generally mayonnaise is spoonable. In the context of the present invention 'mayonnaise' includes emulsions with oil levels ranging from 5% to 85% by weight of the product. Mayonnaises in the context of the present invention do not necessarily need to conform to a standard of identity in any country.

Preferably the condiment in the container of the invention contains from 5% to 85% by weight of oil, preferably from 10% to 80% by weight, more preferred from 20% to 70% by weight. Oil in the preferred condiment is defined similarly as herein before. Preferably the amount of oil is maximally 65% by weight, preferably 50% by weight. Preferably the amount of oil is at least 25% by weight, preferably at least 30% by weight, preferably at least 35% by weight. Any combination of ranges using these mentioned end point are considered to be part of the invention as well.

Preferably the condiment in the container of the invention has a pH ranging from 3 to 6, preferably from 3 to 5, more preferred from 3 to 4.6. Preferably acids used in the condiment are regular acids typically used in food emulsions. Preferably the condiment comprises from 0.1% to 10% by weight of acid, preferably from 0.1% to 5% by weight of acid, preferably from 0.1 % to 2% by weight of acid. The acid preferably is selected from acetic acid, citric acid, lactic acid, phosphoric acid, and combinations thereof. Acetic acid may be added as a component of vinegar, and citric acid may be added as a component of lemon juice. Preferably the condiment contains at least 0.2% by weight of free acetic acid. This way a natural preservation system is created to improve storage time of the condiment.

Preferably, the condiment in the container comprises egg yolk, in particular when the condiment is an oil-in-water emulsion. The presence of egg yolk may be beneficial for taste, emulsification and/or stability of oil droplets in an oil-in-water emulsion. Egg yolk contains phospholipids, which act as emulsifier for the oil droplets. Preferably the concentration of egg yolk in the condiment ranges from 1% to 8% by weight, more preferred from 2% to 6% by weight. The egg yolk may be added as egg yolk component, meaning largely without egg white. Alternatively, the condiment may also contain whole egg, containing both egg white and egg yolk. The total amount of egg yolk in the condiment includes egg yolk that may be present as part of whole egg. Preferably the concentration of phospholipids originating from egg yolk ranges from 0.05% to 1 % by weight, preferably from 0.1 % to 0.8% by weight of the condiment.

Preferably the condiment comprises from 0.5% to 10% by weight of egg yolk, wherein at least 25% by weight of the egg yolk has been modified by treatment with a phospholipase, preferably with phospholipase A2. Preferably in case the condiment is an oil-in-water emulsion, the emulsion comprises from 0.5% to 10% by weight of egg yolk, wherein at least 25% by weight of the egg yolk has been modified by treatment with a phospholipase, preferably with phospholipase A2. In such case all or part of the egg yolk in the condiment has been subjected to an enzymatic conversion process using phospholipase. Preferably the phospholipase that is used to treat egg yolk is phospholipase A2. This process leads to split off of fatty acid chains from the phospholipid molecules, and yields so-called enzyme-modified egg yolk. The reaction products of this enzymatic process are retained in the enzyme-modified egg yolk, meaning that the enzyme-modified egg yolk contains fatty acids split off from the phospholipids. The reaction products of a process with phospholipase A2 are mainly lysophosphatidylcholines (or lysolecithins) and fatty acids. The concentration of the phospholipids 1-lysophosphatidylcholine, 2-lysophosphatidylcholine, and lysophosphatidylethanolamine is increased as compared to the native egg yolk. By this hydrolysis, the emulsifying properties of the egg yolk can be tuned, while the egg yolk retains its organoleptic properties. A suitable source of enzyme modified egg yolk is 'Heat stabilised egg yolk (92-8)', supplied by Bouwhuis Enthoven (Raalte, the Netherlands). This composition contains 92% enzyme modified egg yolk and 8% table salt.

The advantage of the use of enzyme modified egg yolk is that the thickness of the emulsion is increased, as compared to the use of native egg yolk. Preferably at least 75% by weight of the egg yolk has been modified by treatment with a phospholipase, preferably with phospholipase A2. Most preferably all egg yolk present in the condiment has been modified by treatment with phospholipase, preferably with phospholipase A2. Preferably the concentration of egg yolk which has been modified by treatment with phospholipase, preferably with phospholipase A2, ranges from 0.5% to 4% by weight of the condiment, preferably from 1% to 4% by weight of the condiment. Preferably the total concentration of 1-lysophosphatidylcholine and 2-lysophosphatidylcholine ranges from 0.02 to 0.2% by weight of the condiment.

The emulsion may suitably contain one or more additional ingredients which are common to mayonnaise-type emulsions. Examples of such optional ingredients include salt, spices, sugars (in particular mono- and/or disaccharides), vitamins, flavouring, colouring, preservatives, antioxidants, chelators, herbs and vegetable pieces. Such optional additives, when used, collectively do not make up more than 40%, more preferably not more than 20%, more preferably not more than 10% by weight of the emulsion.

The preferred condiment comprised in the container of the invention may contain a structurant in isolated form. This definition excludes structurants which may be part of other ingredients which may be present (e.g. as part of egg yolk). Preferably such structurant is present in case the condiment is an oil-in-water emulsion, preferably with an oil concentration less than 70%, preferably less than 60%. The structurant preferably stabilises the continuous water phase and thickens the emulsion. Many structurants are oligomers or polymers from vegetable, microbial, or animal origin. The structurants can be water-soluble or water-insoluble, and they may be used native or in chemically or physically modified form. Examples of structurants are water-soluble polysaccharides like native starches, chemically or enzymatically modified starches, carrageenan, locust bean gum, carboxymethyl cellulose, and pectin. Ground pulse seed may be used as structurant, as well as cellulosic fibres like citrus fibres and tomato fibres. Also polysaccharides xanthan gum, agar, and alginate can be used, as well as proteins like casein from cow's milk and gelatin. Preferably the concentration of polymeric or oligomeric water structurants is maximally 4% by weight of the condiment, preferably maximally 3% by weight of the condiment, preferably the oil-in-water emulsion. Dependent on the oil level of an oil-in-watear emulsion, the concentration of polymeric or oligomeric water structurants is maximally 2% by weight, preferably maximally 1% by weight, preferably the condiment is substantially free or free from polymeric or oligomeric water structurants.

The condiment used in the invention typically is spoonable as opposed to solid or pourable. The firmness of the composition can be characterised by the Stevens value of the composition, which determines the hardness of the composition. Preferably the emulsion has a Stevens value at 20°C of at least 70 gram. Preferably the emulsion has a Stevens value at 20°C of at least 80 gram, preferably at least 100 gram, preferably ranging from 100 to 200 gram. More preferably the emulsion has a Stevens value at 20°C ranging from 100 to 150 gram. The Stevens value is determined as defined here: the Stevens value is determined at 20°C by using a Stevens LFRA Texture Analyser (ex Brookfield Viscometers Ltd., UK) with a maximum load/measuring range of 1000 grams, and applying a penetration test of 25 mm using a grid, at 2 mm per second penetration rate, in a cup having a diameter of 65 mm, that contains the emulsion; wherein the grid comprises square openings of approximately 3x3 mm, is made up of wire with a thickness of approximately 1 mm, and has a diameter of 40 mm. Preferably the grid comprises square openings of 3x3 mm, is made up of wire with a thickness of 1 mm, and has a diameter of 40 mm. Such method has been described for example in WO 2010/102920 A1.

The viscosity of the preferred emulsion typically lies in the range of 100-80,000 mPa.s, more preferably in the range of 200-30,000 mPa·s. The viscosity can be determined using a Brookfield viscometer operated at 50 rpm and 20°C, using the appropriate spindle for the expected viscosity (according to ISO2555).

The preferred oil-in-water emulsion can be prepared using any common method. Generally such emulsion is prepared by first mixing water, acid, preferably egg yolk, and other water-soluble or dispersible compounds in a stirred vessel. Secondly oil is added to the mixture while stirring. Subsequently, the mixture can be homogenised to create an oil-in-water emulsion, wherein preferably the oil droplets have a volume weighted mean droplet size D3,3 of less than 10 micrometer, preferably ranging from 0.3 to 10 micrometer, preferably from 0.5 to 8 micrometer. Preferably the oil droplets of the emulsion have a volume weighted geometric mean droplet size D3,3 of less than 6 micrometer. Typically, 80 to 100% of the total volume of the oil droplets contained in the present emulsion have a diameter of less than 15 micrometer, more preferably a diameter ranging from 0.5 to 10 micrometer. The homogenisation may be done using a conventional mixer for preparing oil-in-water emulsions, such as a colloid mill, or another mill as described in WO 02/069737 A2. A suitable supplier of such emulsification equipment is Charles Ross & Son Company, (Hauppauge, New York, USA).

### Method for preparation of coated container

The second aspect of the invention provides a method for preparation of a coated container according to the first aspect of the invention, comprising the steps:
a) providing a container comprising an outlet and walls having an inner surface defining a chamber; and
b) coating the inner surface of the container with an oil containing an emulsifier having a HLB-value ranging from 1 to 12 at a concentration ranging from 0.1% to 5% by weight, and wherein the emulsifier comprises one or more compounds selected from monoglycerides of a fatty acid, sucrose fatty acid esters, and sorbitan fatty acid esters.

The coating of the inside of the container may be done by any suitable method, for example using methods as described in US 2008/0283483 A2 and in WO 2014/187725 A1. The oil and the emulsifier are mixed to dissolve the emulsifier in the oil. The oil may be pumped through a duct to a nozzle which sprays the oil onto the internal surface of the container, until the internal surface is at least partly or nearly completely or even completely covered by an oil layer. The nozzle may move relative to the container, to enable the complete coverage of the internal surface. In case the oil layer is too thick, the container may be drained so that excess oil is removed from the container. In such case a thin layer of oil will remain to be present on the internal wall of the container.

The second aspect of the invention also provides a method for preparation of a coated container containing a viscous liquid according to the first aspect of the invention, comprising the steps:
a) providing a container comprising an outlet and walls having an inner surface defining a chamber;
b) coating the inner surface of the container with an oil containing an emulsifier having a HLB-value ranging from 1 to 12 at a concentration ranging from 0.1% to 5% by weight, and wherein the emulsifier comprises one or more compounds selected from monoglycerides of a fatty acid, sucrose fatty acid esters, and sorbitan fatty acid esters; and
c) at least partly filling the container from step b) with a viscous liquid, within a time period between finishing step b) and starting step c) ranging from 1 second to 2 hour.

In step c) the at least partly filling of the container is carried out after the bottle has been coated. In practice the containers will be coated in line with the filling machine, which means that generally the containers will be filled with a viscous liquid as soon as possible after coating, within a period ranging from 1 second to 2 hours. Preferably the time period between finishing step b) and starting step c) ranges from 1 second to 1 hour. In case of longer waiting times than 2 hours between coating and filling of the packaging, the oil which is in the coating may drip from the internal wall and accumulate in the container, or flow out of the container. This may lead to parts of the internal wall to become uncoated. In case accidentally more oil than required is used to coat the container, the container may be drained to remove excess oil.

### A method for improving the evacuation of a viscous liquid

In a third aspect, the present invention provides a method for improving the evacuation of a viscous liquid from a container, by using an oil containing an emulsifier having a HLB-value ranging from 1 to 12 at a concentration ranging from 0.1 % to 5% by weight, and wherein the emulsifier comprises one or more compounds selected from monoglycerides of a fatty acid, sucrose fatty acid esters, and sorbitan fatty acid esters, to coat at least part of the inner surface of the container, prior to filling the container with the viscous liquid. The third aspect of the invention also provides use of an oil containing an emulsifier having a HLB-value ranging from 1 to 12 at a concentration ranging from 0.1 % to 5% by weight, and wherein the emulsifier comprises one or more compounds selected from monoglycerides of a fatty acid, sucrose fatty acid esters, and sorbitan fatty acid esters, to coat at least part of the inner surface of a container, prior to filling the container with a viscous liquid, to improve the evacuation of the viscous liquid from the container.

Preferably, the oil comprises a monoglyceride of a fatty acid and lecithin. Therefore preferably the third aspect of the invention also provides a method for improving the evacuation of a viscous liquid from a container, by using an oil comprising a monoglyceride of a fatty acid and lecithin. Additionally the present invention provides a method to prevent blockage of a spraying device for oil, by using an oil comprising a monoglyceride of a fatty acid and lecithin to spray, using the spraying device.

Preferred aspects described in the context of the first or second or third aspects of the invention are applicable to other aspects of the invention, *mutatis mutandis.*

### EXAMPLES

The following non-limiting examples illustrate the present invention.

### Raw Materials

| *Tradename* | *Description* | Supplier | *Estimated HLB-value* |
|---|---|---|---|
| Dimodan HP | Distilled monoglyceride from hardened palm oil (IV=2) | DuPont Danisco (Copenhagen, Denmark) | 4-8 |
| Dimodan P | Distilled monoglyceride from palm oil (IV=40) | | 4-8 |
| Dimodan RT | Distilled monoglyceride from partially hardened rapeseed oil (IV=60) | | 3-7 |
| Dimodan UP | Distilled monoglyceride from sunflower and palm oil (IV=80) | | 3-8 |
| Dimodan U/J | Distilled monoglyceride from sunflower oil (IV=105) | | 3-7 |
| Sunlec Z | Native sunflower lecithin | Sime Darby Unimills BV (Zwijndrecht, Netherlands) | 4-8 |
| Sunlec M | Partially hydrolyzed sunflower lecithin | | 9 |
| Bolec ZT | Native soybean lecithin | | 4-8 |
| Cetinol | Fractionated soybean lecithin (high in PC) | | 4-8 |
| Ovothin 120 | Egg lecithin | Cargill (Minneapolis, MN, USA) | 4-8 |
| Emulpur IP | De-oiled soybean lecithin | | 4-7 |
| Emulfluid | Fractionated soybean lecithin (high in PC) | | 4-8 |
| O-170 | Sucrose ester oleate | Mitsubishi-Kagaku Foods Corporation (Tokyo, Japan) | 1 |
| S-270 | Sucrose ester stearate | | 2 |
| S-570 | Sucrose ester stearate | | 5 |
| S-770 | Sucrose ester stearate | | 7 |
| S-970 | Sucrose ester stearate | | 9 |
| S-1170 | Sucrose ester stearate | | 11 |
| S-1570 | Sucrose ester stearate | | 15 |
| Span 85 | Sorbitan trioleate | Croda Europe Ltd. (Gouda, Netherlands) | 1.8 |
| Span 80 | Sorbitan monooleate | | 4.3 |
| Span 40 | Sorbitan monopalmitate | | 6.7 |
| Span 20 | Sorbitan monolaurate | | 8.6 |
| Sunflower oil | | Cargill | - |
| Hozol | High oleic sunflower oil | Contined (Wageningen, Netherlands) | - |
| Hellmann's Light mayonnaise | | Unilever UK Ltd. (Leatherhead, Surrey, UK) | - |

### Method: Visual assessment of emptying of plastic bottles

Transparent bottles made from polyethylene terephthalate are used to visually assess the amount of mayonnaise which sticks to the inside of the bottle after emptying the bottle. A scale of 1 to 5 is used to objectively assess how much condiment still sticks to the internal wall of the bottle.
1: Internal wall is clear, no sticking of condiment to the wall.
2: Internal wall is mainly clear, small sticking spots may be present, but a clean look in total.
3: Internal wall has in general a clean look, but some bigger areas may still be covered.
4: Internal wall contains a thin layer of condiment, with some clean spots.
5: Whole bottle internally covered with a layer of condiment.

1 and 2 are good and acceptable, 3 is moderate, and 4 and 5 are not good.

### Example 1: Evacuation of mayonnaise from bottles

Squeezable transparent bottles (internal volume 250 mL) made from polyethylene terephthalate (ex Serioplast spa, Italy) were coated with oil containing no emulsifier or various types of emulsifiers. Coating of the inside of the bottles was done using a vertical metal duct with a nozzle at the top. Oil containing the emulsifier was pumped through the duct using gas pressure. Oil flow and air pressure for were chosen such that a fine mist of oil droplets was created for coating the internal wall of the bottles. The spray nozzle was a type 17310-1/8JJ-18-SS ex Spray Systems Co. (Wheaton, IL, USA).The bottle was manually moved up- or downwards to coat the entire surface. Whether the coating was complete was visually assessed. After coating the bottle was drained for 30 to 60 minutes by putting the bottle with the opening downward on a filter paper to remove excess oil. After drainage the bottles were closed by a cap containing a spout with a membrane with a hole through which the content of the bottle can be pressed by squeezing the bottle. This whole process was done at room temperature.

By weighing each bottle prior and after coating, the total amount of coating layer could be determined. Typically 0.4 g oil was applied to the bottle, corresponding to a surface coverage of about 0.002 g/cm² (internal surface area about 200 cm²).

The bottles were completely filled with commercially available Hellmann's Light mayonnaise. This is a mayonnaise containing about 26 wt% vegetable oil, and about 1.7% of enzymatically modified egg yolk (with phosholipase A2). All egg yolk in this mayonnaise has been enzymatically modified.

Various oils with various emulsifiers systems (different emulsifiers, different concentrations) were used to coat the internal wall of bottles. After coating the bottles were filled immediately, closed with the cap, and stored for a period of maximally 44 weeks at 20°C. Emptying the bottles was done in a standardised way, by squeezing the bottle until no condiment could be evacuated from the bottle anymore, even not after shaking the bottle. After evacuation the amount of residue in the bottle was determined by weighing the bottles. The percentage reduction is based on the initial amount of mayonnaise in the bottles. Also a visual assessment was made of the emptied bottles, using the scale described above.

The average amount of residue and the visual score for the various emulsifiers is given in Table 2 and Table 3. The data points in these two tables have been determined taking the average of a range of measurement points for each emulsifier during the storage period of maximally 44 weeks. As an example the data points for 2% Sunlec M in sunflower oil are given in Table 1:

**Table 1 Evacuation test results after storage at 20°C (% residue and visual score after squeeze test) as function of storage time, for 2% Sunlec M in sunflower oil. All these data points are the average of two measurements.**

| *Shelf life [weeks]* | *residue [%]* | *visual score [-]* | | *Shelf life [weeks]* | *residue [%]* | *visual score [-]* |
|---|---|---|---|---|---|---|
| 0 | 2 | 1 | | 20 | 5.5 | 2.5 |
| 1 | 3 | 1 | | 24 | 5.5 | 3 |
| 2 | 2.5 | 2 | | 28 | 4.5 | 2 |
| 4 | 5.5 | 1.5 | | 32 | 12 | 3 |
| 8 | 4.5 | 2 | | 37 | 4.5 | 2.5 |
| 12 | 5 | 2 | | 40 | 8 | 3 |
| 16 | 4.5 | 2 | | | | |

The average number for the residue data from this table is 5%, which is the number given in Table 2 for 2% Sunlec M. The average number for the visual score is 2.1, which is the number given in Table 3 for 2% Sunlec M. These data show that within the first four weeks after filling the bottle, the residue increases and the visual score increase, and then reaches an equilibrium value. This behaviour was seen for the other emulsifiers as well.

**Table 2 Evacuation test results after storage at 20°C; percentage residue after squeeze test, as function of the concentration of emulsifier in sunflower oil; average numbers determined during storage time up to 44 weeks.**

| *Emulsifier system in oil* | *0% w*/*w* | *0.1% w*/*w* | *0.25% w*/*w* | *0.5% w*/*w* | *1% w*/*w* | *2% w*/*w* | *5% w*/*w* | *10% w*/*w* |
|---|---|---|---|---|---|---|---|---|
| No coating | 15 wt% | | | | | | | |
| Sunflower oil (no emulsifier) | 13 wt% | | | | | | | |
| Dimodan HP | | 7 wt% | | | | | | |
| Dimodan P | | 4 wt% | | | | | | |
| Dimodan RT | | 10 wt% | | | | | | |
| Dimodan UP | | 9 wt% | | | | | | |
| Dimodan U/J | | | | | | 10 wt% | | |
| Sunlec M | | 13 wt% | 8 wt% | 9 wt% | 9 wt% | 5 wt% | 4 wt% | 3 wt% |
| Bolec ZT | | 7 wt% | | 7 wt% | | | | |
| Cetinol | | 10 wt% | | 4 wt% | | | 3 wt% | |
| Emulpur | | 6 wt% | | 7 wt% | | | | |
| Sunlec Z | | 8 wt% | | 8 wt% | | 7 | | |
| Ovothin 120 | | | | 7 wt% | 5 wt% | 6 wt% | | |

These data show that the amount of residue reduces when emulsifier is added to the oil. In particular the lecithins and Dimodan P show good results as compared to sunflower oil without an added emulsifier. The visual scores of these bottles are given in the following table.

**Table 3 Evacuation test results after storage at 20°C, visual score (scale 1 to 5) as function of the concentration of emulsifier in vegetable oil.**

| *Emulsifier type* | *0% w*/*w* | *0.1% w*/*w* | *0.25% w*/*w* | *0.5% w*/*w* | *1% w*/*w* | *2% w*/*w* | *5% w*/*w* | *10% w*/*w* |
|---|---|---|---|---|---|---|---|---|
| None | 5.0 | | | | | | | |
| Oil | 4.7 | | | | | | | |
| Dimodan HP | | 5.0 | | | | | | |
| Dimodan P | | 2.6 | | | | | | |
| Dimodan RT | | 4.7 | | | | | | |
| Dimodan UP | | 5.0 | | | | | | |
| Dimodan U/J | | | | | | 5.0 | | |
| Sunlec M | | 4.4 | 3.9 | 3.6 | 3.5 | 2.1 | 1.6 | 1.6 |
| Bolec ZT | | 3.4 | | 3.5 | | | | |
| Cetinol | | 4.0 | | 1.9 | | | 1.9 | |
| Emulpur | | 3.1 | | 3.4 | 3.0 | | | |
| Sunlec Z | | 3.4 | | 3.3 | | 3.3 | | |
| Ovothin 120 | | | | 2.8 | 1.7 | 1.9 | | |
| Emulfluid | | | | | 2.0 | 1.0 | | |

Comparing Table 2 and Table 3 shows that reduction of the residue weight as shown in Table 2, does not always lead to an increase of the visual score. Nevertheless, as the residue weight decreases, the addition of the emulsifier leads to improved evacation of the mayonnaises from the bottles. Additionally, in particular the addition of various lecithins or Dimodan P leads to improvement of the evacuation of the used mayonnaise from the coated bottles as compared to coating with oil alone.

These data also show that for Sunlec M a concentration above 2% has a relatively small effect, when compared to the large effect when the concentration is increased from 0.25% to 2%. 5% Sunlec M in oil shows an improvement compared 2% Sunlec M in oil. 10% Sunlec M in oil compared to 5% Sunlec M shows a very tiny effect, at the expense of 5% Sunlec M extra. Therefore there is a balance between the high concentration of emulsifier that facilitates evacuation of a viscous liquid from the container, and the extra amount of emulsifier required.

### Example 2 - Combination of lecithin and monoglyceride

Sunflower oil containing various concentrations of Sunlec M and/or Dimodan U/J was prepared. The effect on turbidity of oil, and on evacuation of mayonnaise from a PET bottle was determined. The mixing of the emulsifiers in the oil was done at room temperature, and subsequently the oil mixtures were centrifuged at 5800g for 30 minutes in a Sigma 8K Centrifuge. Subsequently the mixtures were stored at 20°C. The effect on the turbidity is given in Table 4.

**Table 4 Stability of lecithin/mono-glyceride in sunflower oil during storage at 20°C.**

| *Concentration Sunlec M [wt%]* | *Concentration Dimodan U*/*J [*wt*%]* | *1 day* | *1 week* | *2 weeks* | *3 weeks* |
|---|---|---|---|---|---|
| 1 | 0 | Turbid | | | |
| 2 | 0 | Turbid | | | |
| 3 | 0 | Turbid | | | |
| 4 | 0 | Turbid | | | |
| 1 | 1 | Clear | Clear | Clear | Clear |
| 2 | 1 | Clear | Clear | Clear | Clear |
| 3 | 1 | Clear | Clear | Clear | Clear |
| 4 | 1 | Clear | Clear | Clear | Clear |
| 1 | 2 | Clear | Clear | Clear | Slightly turbid |
| 2 | 2 | Clear | Clear | Clear | Slightly turbid |
| 3 | 2 | Clear | Clear | Clear | Clear |
| 4 | 2 | Clear | Clear | Clear | Clear |

The evacuation performance of mayonnaise from PET bottles coated with oil with combinations of Sunlec M/Dimodan U/J, and subsequently centrifuged, is given in the table below. The bottles were prepared similarly as described in example 1, and the same bottles and mayonnaise were used.

**Table 5 Evacuation test results after storage at 20°C; percentage residue after squeeze test, as function of the concentration of Sunlec M and Dimodan U/J in sunflower oil.**

| *Concentration Sunlec M [wt%]* | *Concentration Dimodan U*/*J [wt%]* | *1 week* | *4 weeks* |
|---|---|---|---|
| 1 | 1 | 3 wt% | 3 wt% |
| 2 | 1 | 2 wt% | 4 wt% |
| 3 | 1 | 4 wt% | 3 wt% |

These results show that the combination of Sunlec M and Dimodan U/J not only leads to clear oils upon storage, but also good results on evacuation of the mayonnaise from the PET bottles.

### Example 3 - Evacuation of mayonnaise from coated bottles using sucrose fatty acid esters and sorbitan esters

Similarly as in example 1, internally coated bottles were prepared, and the same bottles and mayonnaise were used. High oleic sunflower oil containing various types of sucrose fatty acid esters or sorbitan esters at two concentrations were used to internally coat the bottles. The results on the amount of residue and the visual assessment are given in Table 6 and Table 7.

**Table 6 Evacuation test results after storage at 20°C; percentage residue after squeeze test, as function of the type and concentration of sorbitan fatty acid ester in high oleic sunflower oil and storage time.**

| *Sorbitan fatty acid ester* | *Concentration in oil [wt%]* | *1 week* | | *4.7 weeks* | |
|---|---|---|---|---|---|
| | | *% residue* | *visual score* | *% residue* | *visual score* |
| Span 85 | 1 | 7% | 3 | 6% | 2 |
| Span 85 | 2 | 3% | 2 | 7% | 1 |
| Span 80 | 1 | 5% | 2 | 3% | 1 |
| Span 40 | 1 | 3% | 2 | 3% | 1 |
| Span 40 | 2 | 3% | 1 | 3% | 1 |
| Span 20 | 1 | 3% | 2 | 3% | 1 |
| Span 20 | 2 | 4% | 2 | 2% | 2 |

These results show that the use of these Spans across a HLB value ranging from 1.8 to 8.6 show good results on evacuation, the amount of residue is low for the bottles coated with oil with these emulsifiers.

**Table 7 Evacuation test results after storage at 20°C; percentage residue after squeeze test, as function of the type and concentration of sucrose fatty acid ester in high oleic sunflower oil and storage time.**

| *Sucrose fatty acid ester* | *Concentration in oil [wt%]* | *1 week* | | *4.7 weeks* | |
|---|---|---|---|---|---|
| | | *% residue* | *visual score* | *% residue* | *visual score* |
| O-170 | 1 | 2% | 1 | 2% | 1 |
| O-170 | 2 | 5% | 2 | 2% | 1 |
| S-270 | 1 | 4% | 1 | 4% | 2 |
| S-270 | 2 | 4% | 1 | 2% | 1 |
| S-570 | 1 | 3% | 1 | 2% | 1 |
| S-570 | 2 | 2% | 1 | 3% | 1 |
| S-770 | 1 | 2% | 1 | 3% | 2 |
| S-770 | 2 | 4% | 1 | 2% | 1 |
| S-970 | 2 | 4% | 1 | 5% | 3 |
| S-1170 | 1 | | | 4% | 3 |
| S-1170 | 2 | 9% | 4 | 4% | 2 |
| S-1570 | 1 | 7% | 4 | 4% | 3 |
| S-1570 | 2 | | | 5% | 3 |

Although the sucrose fatty acid ester with an HLB-value of 15 (S-1570), still has a reasonable visual score after 4.7 weeks, better results are obtained with the other sucrose fatty acid esters. Emulsifiers with such high HLB-values also may lead to problems with solubility in the oil, as the solubility of the emulsifiers decreases with increasing HLB-value.

## Claims

1. A container comprising an outlet and walls having an inner surface defining a chamber, wherein at least part of the inner surface of the container is coated with oil containing an emulsifier having a HLB-value ranging from 1 to 12 at a concentration ranging from 0.1% to 5% by weight, and wherein the emulsifier comprises one or more compounds selected from monoglycerides of a fatty acid, sucrose fatty acid esters, and sorbitan fatty acid esters,
and wherein the emulsifier further comprises lecithin, and
wherein at least 25% of the phospholipids in the lecithin has been hydrolysed in a process using phospholipase A2.

2. A container according to claim 1, wherein the amount of oil containing emulsifier on the inner surface ranges from 0.001 to 0.005 gram per square centimetre.

3. A container according to claim 1 or 2, wherein the emulsifier has a HLB-value ranging from 3 to 11, preferably from 4 to 10.

4. A container according to any of claims 1 to 3, wherein the concentration of the emulsifier ranges from 0.2% to 4% by weight of the oil.

5. A container according to any of claims 1 to 4, wherein the lecithin preferably originates from soyabean, sunflower seed, or egg, or from any combination of these.

6. A container according to any of claims 1 to 5, wherein the oil comprises a monoglyceride of a fatty acid and lecithin.

7. A container according to any of claims 1 to 6, wherein the wall of the container comprises polyethylene terephthalate.

8. A container according to any of claims 1 to 7, containing a viscous liquid in the chamber, preferably a condiment.

9. A container according to claim 8 comprising a condiment, wherein the condiment is an oil-in-water emulsion, preferably a mayonnaise.

10. A container according to claim 8 or 9 comprising a condiment, wherein the condiment comprises from 0.5% to 10% by weight of egg yolk, wherein at least 25% by weight of the egg yolk has been modified by treatment with a phospholipase, preferably with phospholipase A2.

11. A method for preparation of a coated container according to any of claims 1 to 7, comprising the steps:
a) providing a container comprising an outlet and walls having an inner surface defining a chamber; and
b) coating the inner surface of the container with an oil containing an emulsifier having a HLB-value ranging from 1 to 12 at a concentration ranging from 0.1% to 5% by weight, and wherein the emulsifier comprises one or more compounds selected from monoglycerides of a fatty acid, sucrose fatty acid esters, and sorbitan fatty acid esters, and wherein the emulsifier further comprises lecithin, and
wherein at least 25% of the phospholipids in the lecithin has been hydrolysed in a process using phospholipase A2.

12. A method for preparation of a coated container according to any of claims 8 to 10, comprising the steps:
a) providing a container comprising an outlet and walls having an inner surface defining a chamber;
b) coating the inner surface of the container with an oil containing an emulsifier having a HLB-value ranging from 1 to 12 at a concentration ranging from 0.1% to 5% by weight, and wherein the emulsifier comprises one or more compounds selected from monoglycerides of a fatty acid, sucrose fatty acid esters, and sorbitan fatty acid esters and wherein the emulsifier further comprises lecithin, and
wherein at least 25% of the phospholipids in the lecithin has been hydrolysed in a process using phospholipase A2; and
c) at least partly filling the container from step b) with a viscous liquid, within a time period between finishing step b) and starting step c) ranging from 1 second to 2 hour.

13. A method for improving the evacuation of a viscous liquid from a container, by using an oil containing an emulsifier having a HLB-value ranging from 1 to 12 at a concentration ranging from 0.1% to 5% by weight, and wherein the emulsifier comprises one or more compounds selected from monoglycerides of a fatty acid, sucrose fatty acid esters, and sorbitan fatty acid esters, and wherein the emulsifier further comprises lecithin, and wherein at least 25% of the phospholipids in the lecithin has been hydrolysed in a process using phospholipase A2, to coat at least part of the inner surface of the container, prior to filling the container with the viscous liquid.

## Patentansprüche

1. Behälter, der einen Auslass und Wände mit einer eine Kammer definierenden Innenfläche umfasst, wobei mindestens ein Teil der Innenfläche des Behälters mit einem Öl beschichtet ist, das einen Emulgator enthält, der einen HLB-Wert aufweist, der von 1 bis 12 bei einer Konzentration beträgt, die von 0,1 bis 5 Gewichts-% beträgt, und wobei der Emulgator eine oder mehrere Verbindungen umfasst, die aus Monoglyceriden einer Fettsäure, Sucrosefettsäureestern und Sorbitanfettsäureestern ausgewählt sind, und wobei der Emulgator ferner Lecithin umfasst und wobei mindestens 25% der Phospholipide in dem Lecithin in einem Verfahren unter Verwendung von Phospholipase A2 hydrolysiert worden sind.

2. Behälter nach Anspruch 1, wobei die Menge des Emulgator enthaltenden Öls auf der Innenfläche von 0,001 bis 0,005 Gramm pro Quadratzentimeter beträgt.

3. Behälter nach Anspruch 1 oder 2, wobei der Emulgator einen HLB-Wert aufweist, der von 3 bis 11, vorzugsweise von 4 bis 10 beträgt.

4. Behälter nach irgendeinem der Ansprüche 1 bis 3, wobei die Konzentration des Emulgators von 0,2 bis 4 Gewichts-% des Öls beträgt.

5. Behälter nach irgendeinem der Ansprüche 1 bis 4, wobei das Lecithin vorzugsweise von Sojabohnen, Sonnenblumensamen oder Ei oder von irgendeiner Kombination von diesen stammt.

6. Behälter nach einem der Ansprüche 1 bis 5, wobei das Öl ein Monogylcerid einer Fettsäure und Lecithin umfasst.

7. Behälter nach einem der Ansprüche 1 bis 6, wobei die Wand des Behälters Polyethylenterephthalat umfasst.

8. Behälter nach einem der Ansprüche 1 bis 7, der eine viskose Flüssigkeit in der Kammer enthält, vorzugsweise ein Würzmittel.

9. Behälter nach Anspruch 8, umfassend ein Würzmittel, wobei das Würzmittel eine Öl-in-Wasser-Emulsion, vorzugsweise eine Mayonnaise, darstellt.

10. Behälter nach Anspruch 8 oder 9, umfassend ein Würzmittel, wobei das Würzmittel von 0,5 bis 10 Gewichts-% Eigelb umfasst, wobei mindestens 25 Gewichts-% des Eigelbs durch Behandlung mit einer Phospholipase, vorzugsweise mit Phospholipase A2, modifiziert worden sind.

11. Verfahren zur Herstellung eines beschichteten Behälters nach einem der Ansprüche 1 bis 7, umfassend die Schritte:
a) Bereitstellen eines Behälters, der einen Auslass und Wände mit einer eine Kammer definierenden Innenfläche umfasst, und
b) Beschichten der Innenfläche des Behälters mit einem Öl, das einen Emulgator enthält, der einen HLB-Wert aufweist, der von 1 bis 12 bei einer Konzentration beträgt, die von 0,1 bis 5 Gewichts-% beträgt, und wobei der Emulgator eine oder mehrere Verbindungen umfasst, die aus Monoglyceriden einer Fettsäure, Sucrosefettsäureestern und Sorbitanfettsäureestern ausgewählt sind, und wobei der Emulgator ferner Lecithin umfasst und wobei mindestens 25% der Phospholipide in dem Lecithin in einem Verfahren unter Verwendung von Phospholipase A2 hydrolysiert worden sind.

12. Verfahren zur Herstellung eines beschichteten Behälters nach einem der Ansprüche 8 bis 10, umfassend die Schritte:
a) Bereitstellen eines Behälters, der einen Auslass und Wände mit einer eine Kammer definierenden Innenfläche umfasst,
b) Beschichten der Innenfläche des Behälters mit einem Öl, das einen Emulgator enthält, der einen HLB-Wert aufweist, der von 1 bis 12 bei einer Konzentration beträgt, die von 0,1 bis 5 Gewichts-% beträgt, und wobei der Emulgator eine oder mehrere Verbindungen umfasst, die aus Monoglyceriden einer Fettsäure, Sucrosefettsäureestern und Sorbitanfettsäureestern ausgewählt sind, und wobei der Emulgator ferner Lecithin umfasst und wobei mindestens 25% der Phospholipide in dem Lecithin in einem Verfahren unter Verwendung von Phospholipase A2 hydrolysiert worden sind, und
c) mindestens teilweises Füllen des Behälters vom Schritt b) mit einer viskosen Flüssigkeit, innerhalb einer Zeitdauer zwischen dem Beenden des Schritts b) und des Startens des Schritts c), die von 1 Sekunde bis zu 2 Stunden beträgt.

13. Verfahren zum Verbessern des Abtransportierens einer viskosen Flüssigkeit aus einem Behälter unter Verwendung eines Öls, das einen Emulgator enthält, der einen HLB-Wert aufweist, der von 1 bis 12 bei einer Konzentration beträgt, die von 0,1 bis 5 Gewichts-% beträgt, und wobei der Emulgator eine oder mehrere Verbindungen umfasst, die aus Monoglyceriden einer Fettsäure, Sucrosefettsäureestern und Sorbitanfettsäureestern ausgewählt sind, und wobei der Emulgator ferner Lecithin umfasst und wobei mindestens 25% der Phospholipide in dem Lecithin in einem Verfahren unter Verwendung von Phospholipase A2 hydrolysiert worden sind, um zumindest einen Teil der Innenfläche des Behälters vor dem Füllen des Behälters mit der viskosen Flüssigkeit zu beschichten.

## Revendications

1. Récipient comprenant une sortie et des parois ayant une surface interne définissant une chambre, où au moins une partie de la surface interne du récipient est revêtue d'huile contenant un émulsionnant ayant une valeur HLB de 1 à 12 à une concentration de 0,1 % à 5 % en masse, et où l'émulsionnant comprend un ou plusieurs composés choisis parmi des monoglycérides d'un acide gras, des esters de saccharose et d'acides gras, et des esters de sorbitane et d'acides gras, et où l'émulsionnant comprend de plus de la lécithine, et
où au moins 25 % des phospholipides dans la lécithine ont été hydrolysés dans un procédé utilisant une phospholipase A2.

2. Récipient selon la revendication 1, où la quantité d'huile contenant un émulsionnant sur la surface interne est de 0,001 à 0,005 gramme par centimètre carré.

3. Récipient selon la revendication 1 ou 2, où l'émulsionnant présente une valeur HLB de 3 à 11, de préférence de 4 à 10.

4. Récipient selon l'une quelconque des revendications 1 à 3, où la concentration de l'émulsionnant est de 0,2 % à 4 % en masse de l'huile.

5. Récipient selon l'une quelconque des revendications 1 à 4, où la lécithine provient de préférence de soja, de graine de tournesol, ou d'oeuf, ou d'une combinaison quelconque de ceux-ci.

6. Récipient selon l'une quelconque des revendications 1 à 5, où l'huile comprend un monoglycéride d'un acide gras et de la lécithine.

7. Récipient selon l'une quelconque des revendications 1 à 6, où la paroi du récipient comprend du polyéthylène téréphtalate.

8. Récipient selon l'une quelconque des revendications 1 à 7, contenant un liquide visqueux dans la chambre, de préférence un condiment.

9. Récipient selon la revendication 8 comprenant un condiment, où le condiment est une émulsion huile-dans-eau, de préférence une mayonnaise.

10. Récipient selon la revendication 8 ou 9 comprenant un condiment, où le condiment comprend de 0,5 % à 10 % en masse de jaune d'oeuf, où au moins 25 % en masse du jaune d'oeuf ont été modifiés par un traitement avec une phospholipase, de préférence avec une phospholipase A2.

11. Procédé de préparation d'un récipient revêtu selon l'une quelconque des revendications 1 à 7, comprenant les étapes :
a) de fourniture d'un récipient comprenant une sortie et des parois ayant une surface interne définissant une chambre ; et
b) de revêtement de la surface interne du récipient avec une huile contenant un émulsionnant ayant une valeur HLB de 1 à 12 à une concentration de 0,1 % à 5 % en masse, et où l'émulsionnant comprend un ou plusieurs composés choisis parmi des monoglycérides d'un acide gras, des esters de saccharose et d'acides gras, des esters de sorbitane et d'acides gras, et où l'émulsionnant comprend de plus de la lécithine, et où au moins 25 % des phospholipides dans la lécithine ont été hydrolysés dans un procédé utilisant une phospholipase A2.

12. Procédé de préparation d'un récipient revêtu selon l'une quelconque des revendications 8 à 10, comprenant les étapes :
a) de fourniture d'un récipient comprenant une sortie et des parois ayant une surface interne définissant une chambre ;
b) de revêtement de la surface interne du récipient avec une huile contenant un émulsionnant ayant une valeur HLB de 1 à 12 à une concentration de 0,1 % à 5 % en masse, et où l'émulsionnant comprend un ou plusieurs composés choisis parmi des monoglycérides d'un acide gras, des esters de saccharose et d'acides gras, et des esters de sorbitane et d'acides gras et où l'émulsionnant comprend de plus de la lécithine, et
où au moins 25 % des phospholipides dans la lécithine ont été hydrolysés dans un procédé utilisant une phospholipase A2 ; et
c) de remplissage au moins partiel du récipient de l'étape b) avec un liquide visqueux, dans une période de temps entre la fin de l'étape b) et le début de l'étape c) de 1 seconde à 2 heures.

13. Procédé d'amélioration de l'évacuation d'un liquide visqueux d'un récipient, en utilisant une huile contenant un émulsionnant ayant une valeur HLB de 1 à 12 à une concentration de 0,1 % à 5 % en masse, et où l'émulsionnant comprend un ou plusieurs composés choisis parmi des monoglycérides d'un acide gras, des esters de saccharose et d'acides gras, et des esters de sorbitane et d'acides gras, et où l'émulsionnant comprend de plus de la lécithine, et où au moins 25 % des phospholipides dans la lécithine ont été hydrolysés dans un procédé utilisant une phospholipase A2, pour revêtir au moins une partie de la surface interne du récipient, avant le remplissage du récipient avec le liquide visqueux.
